Europäisches Patentamt

European Patent Office

Office européen des brevets

(11) Numéro de publication: **0 312 454**
A2

(12) **DEMANDE DE BREVET EUROPEEN**

(21) Numéro de dépôt: **88402586.7**

(22) Date de dépôt: **12.10.88**

(51) Int. Cl.⁴: **B 09 B 3/00**
G 01 N 13/00, G 01 N 15/08

(30) Priorité: **13.10.87 FR 8714091**

(43) Date de publication de la demande:
**19.04.89 Bulletin 89/16**

(84) Etats contractants désignés:
**BE CH DE ES GB IT LI NL**

(71) Demandeur: **D.S. ENVIRONNEMENT
La Roue
F-69380 Lissieu (FR)**

(72) Inventeur: **Blanchard, Jean-Marie
6, allée des Rossignols
F-69160 Tassin la Demi Lune (FR)**

**Didier, Gérard
52, Grande Rue des Charpennes
F-69100 Villeurbanne (FR)**

(74) Mandataire: **Timoney, Ian Charles Craig
SOCIETE NATIONALE ELF AQUITAINE Departement
Propriété Industrielle Tour Elf Cedex 45
F-92078 Paris La Défense (FR)**

(54) **Procédé d'élimination de déchets.**

(57) La présente invention concerne un procédé d'élimination d'au moins deux déchets dont au moins un est inacceptable en l'état, caractérisé en ce qu'il consiste à mélanger un ou plusieurs déchets de faible siccité mais n'exsudant pas spontanément de liquide avec un ou plusieurs déchets ultimes solides de forte siccité et à forte capacité d'absorption de liquide pour obtenir un matériau composite acceptable sur un site de stockage de déchets.

EP 0 312 454 A2

## Description

## PROCEDE D'ELIMINATION DE DECHETS

La présente invention concerne un procédé d'élimination de déchets , par utilisation de déchets de différente siccité.

A l'heure actuelle, il existe de très nombreux procédés de solidification des déchets industriels .

L'utilisation de ces procédés a un double but, d'une part de conférer aux déchets solidifiés une résistance mécanique telle qu'ils puissent être mis en décharge contrôlée dans un état physique compatible avec les contraintes d'exploitation sans risque pour les personnels et les engins de chantier, d'autre part de rendre les déchets beaucoup plus résistants à l'action des eaux météoriques et par là éviter au maximum la pollution des eaux souterraines.

Actuellement se pose le problème du traitement de déchets solides telles que cendres, poussières et mâchefers, mais aussi de déchets à faible siccité (boues industrielles et urbaines de traitement d'eaux ou d'effluents).

Enfin, la mise en décharge directe de ces cendres n'est pas possible car les cendres ont une fraction soluble trop élevée, entre 25 et 40%.

En effet, si l'on prend l'exemple des cendres recueillies dans les trémies sous chaudière et dans le système de dépoussiérage, ces cendres forment une poudre grisâtre dont la granulométrie est assez variable et dont la densité sèche est voisine de 0,4. Ces cendres sont de composition variable suivant la provenance des produits brûlés mais comportent essentiellement des chlorures dont la proportion peut atteindre 20 à 25%, de la chaux dont la proportion est extrêmement variable dans la proportion de 10 à 30%. Un exemple de composition de cendres peut être le suivant : chlorures 4%, sulfates 8%, carbonates 0,8%, anhydrides phosphoriques 1,5%, chaux 13%, magnésie 4%, oxyde de potassium 5,5%, oxyde de sodium 4%, silice 31%, alumine 15%, oxyde ferrique 3%, plomb 0,4%, zinc 2,3% et d'autres produits en quantité négligeable comme le cadmium, le chrome, le cuivre, le manganèse, le nickel, l'étain et le titane.

Un premier but de l'invention est donc de proposer un procédé de traitement de déchets à forte fraction soluble, de façon à permettre la mise en décharge de ces produits dans des sites de très faible perméabilité. On entend par site de très faible perméabilité les sites dont le coefficient $K_S$ de perméabilité à saturation est inférieur ou égal à $10^{-9}$ mls. Par ailleurs, au regard de la législation actuelle, les déchets à forte fraction soluble sont des déchets dont la fraction soluble est supérieure à 10% du poids du déchet brut.

Le premier but de l'invention est obtenu par le fait que le procédé d'élimination d'au moins deux déchets, dont au moins un est inacceptable en l'état consiste à mélanger un ou plusieurs déchets de faible siccité mais n'exsudant pas spontanément de liquide avec un ou plusieurs déchets ultimes solides de forte siccité et à forte capacité d'absorption de liquide pour obtenir un matériau composite acceptable sur un site de stockage de déchets.

Un des avantages de procédé selon l'invention est de diminuer les frais occasionnés par le traitement de ces déchets selon des procédés de traitement conventionnels mais également de réduire l'utilisation de matériaux nobles tels que des argiles ou des ciments qui ne sont pas forcément disponibles sur le lieu de traitement ou à proximité du lieu de traitment des déchets.

Selon une autre caractéristique, les déchets peuvent avoir une forte teneur en composés alcalins ou alcalino-terreux.

Selon une autre caractéristique, les déchets à forte siccité peuvent être constitués par des cendres et poussières provenant du traitement des fumées, ou de façon plus générale par des matériaux pulvérulents.

Selon une autre caractéristique, les déchets solides de forte siccité sont des mâchefers d'incinération d'ordures ménagères, des sables de fonderies, ou tout autres matériaux de type alumino-silicate.

Selon une autre caractéristique, les déchets solides sont des suies provenant de combustion.

Selon une autre caractéristique, les déchets solides sont des scories d'affinage des métaux.

Selon une autre caractéristique, le déchet solide à faible siccité peut être un matériau argileux.

Un deuxième but de l'invention est d'élaborer un procédé général de traitement des déchets afin de conférer au matériau composite :

- tout d'abord une aptitude au compactage permettant de définir les pourcentages des différents constituants du composite, dont la résultante est une teneur en eau qui confère au matériau une portance suffisante;

- puis ensuite une perméabilité inférieure à $10^{-9}$ m/s avec ou sans adjonction ultérieure de matériau argileux.

Un troisième but de l'invention est de proposer une méthode de percolation pour vérifier l'acceptabilité du matériau composite.

Ce but est atteint par le fait que la méthode de percolation est mise en oeuvre dans un dispositif de percolation et consiste :

- à recueillir par un gradient hydraulique supérieur à 1 un volume fixé de percolat par un nombre d'extractions fixées de volume différent ;

- à déterminer dans quel volume de percolat une quantité d'une substance déterminée est extraite ;

- et à vérifier que pour une perméabilité correspondant à celle du matériau composite et un gradient hydraulique unitaire la quantité de substance percolée est compatible avec les normes en vigueur.

Un quatrième but de l'invention est de proposer un dispositif de percolation.

Ce but est atteint par le fait que le dispositif de percolation comprend un réservoir (R) d'eau déminéralisée pour alimenter, sous une pression déterminée par une vanne (V3) reliant le réservoir (R) à un réservoir d'azote sous pression, un perméamètre (10) dont l'orifice de sortie est relié à un flacon (25).

Selon une autre caractéristique, le perméamètre est constitué de deux embases (4,5) serrant entre deux joints d'étanchéïté (7) une bague (2) contenant l'échantillon de mélange, ces embases comportant respectivement des canaux (40,50) et des orifices (41,51) mettant en communication l'extérieur du perméamètre avec l'intérieur de la bague (2) par l'intermédiaire de deux rondelles poreuses (6).

D'autres caractéristiques et avantages de la présente invention apparaîtront plus clairement à la lecture de la description ci-après du mode opératoire explicitant le mode de mise en oeuvre de l'invention, description faite en relation avec les figures dans lesquelles :

- La figure 1 représente une vue en coupe partielle d'un perméamètre pour échantillons de mélange ;
- La figure 2 représente une vue schématique de l'appareillage d'extraction des percolats ;
- La figure 3 représente le graphique des courbes de débit de percolat d'un échantillon de mélange en fonction de la pression hydraulique et du coefficient de perméabilité de l'échantillon ;
- La figure 4 représente l'évolution de la densité sèche en fonction de la teneur en eau des mélanges étudiés ;
- La figure 5 représente l'évolution de la résistance à la pénétration en fonction de la teneur en eau des mélanges étudiés ;
- La figure 6 représente l'évolution de la résistance à la pénétration en fonction de la concentration (C).

Ce mode opératoire consiste à définir dans un premier temps les pourcentages des divers constituants du futur matériau composite.

Le pourcentage optimal de chacun de ces constituants sera fixé à partir d'un essai PROCTOR NORMAL suivi d'un essai de portance.

L'essai PROCTOR NORMAL (compactage en trois couches, 25 coups par couche, selon la norme ASTM D 698 58 T ou AASHOT 99) suivi d'un essai de portance de type C.B.R ou aiguille Proctor permettent de fixer la teneur en eau du matériau composite à une valeur telle qu'un compactage sur le site de décharge soit possible par le simple passage d'engins employés en de tels lieux.

Dans un deuxième temps, un essai de perméabilité, suivi de l'analyse des différentes fractions d'eau écoulée permet de valider les pourcentages retenus précédemment.

Cet essai de perméabilité et l'analyse ont pour objectif l'extraction des substances solubles contenues dans un déchet ayant subi un traitement de type consolidation (compactage après malaxage avec un absorbant) ou solidification (ex : mélange avec un liant hydraulique ou un réactif organique). L'extraction est réalisée par percolation forcée et fractionnée à travers un échantillon représentatif de ce que nous aurions après traitement lors de sa mise en dépôt, cet échantillon étant placé dans un perméamètre (10). L'analyse des concentrations en substances toxiques solubles contenues dans les diverses extractions permet d'estimer ce que le déchet traité pourra libérer dans son environnement, au bout d'un temps infini. De plus, l'essai préconisé permet de déterminer le coefficient de perméabilité du déchet traité.

Pour effectuer cet essai et ces mesures, des échantillons sont préparés de façon que la taille des plus gros éléments contenus dans le déchet traité soit inférieure à 4 mm.

Les échantillons sont obtenus par :
- une étape de malaxage du déchet avec un absorbant ou un produit de solidification. Une étude préalable permet de définir les pourcentages des divers composants du mélange en fonction de certains critères liés soit à leur possibilité de mise en ouevre, soit à certaines caractéristiques du "produit fini" (teneur en liquide permettant le compactage à l'énergie du Proctor Normal, portance, résistance mécanique...) ;
- suivie d'une étape de remplissage ou compactage de l'échantillon à tester dans une bague en PVC de diamètre intérieur 94 mm et de hauteur 40 mm, le mode de mise en place devant être similaire à celui que nous aurons lors de la mise en dépôt ;
- d'une étape d'arasage (sans lissage) des deux faces. La quantité de matériau contenue dans le volume (V), 277,6 cm$^3$, du moule ($P_{HO}$) se détermine par pesée ;
- et d'une étape de conditionnement suivant le mode de conservation retenu (séchage à l'air ambiant, température et humidité contrôlées, teneur en liquide constante...) fonction des conditions ultérieures de stockage du déchet traité.

Si après la période et le mode de traitement retenus l'échantillon n'a subi aucun retrait, nous pouvons le placer (après pesée $P_{H1}$) directement dans l'appareil permettant de réaliser le test de perméabilité- lixiviation. Si, par contre, nous avons un léger jeu radial (dans ce cas l'échantillon sort de sa bague), il faut retailler l'échantillon à un diamètre voisin de 80 mm et injecter dans le jeu radial(entre la bague et l'échantillon)un produit neutre et imperméable (K < 10$^{-13}$ m/s) durcissant rapidement sans dégagement de chaleur (résine, plâtre dentaire ...). Pendant toutes ces opérations, il faut éviter que l'échantillon ne se désséche.

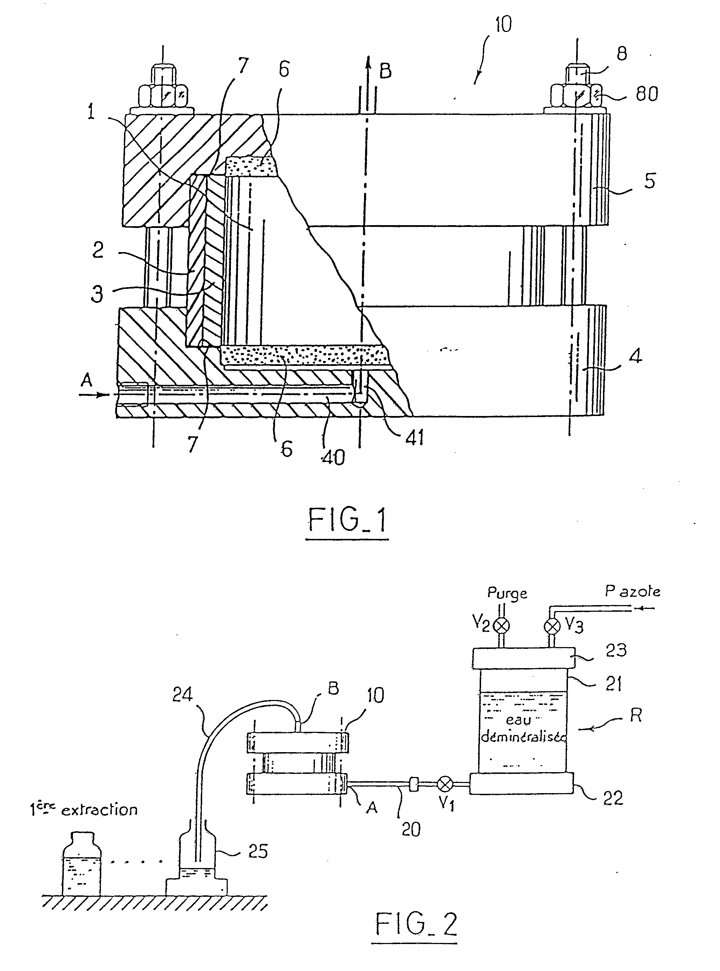

Dans le perméamètre (10) représenté à la figure 1, la bague (2) contenant l'échantillon de mélange est placée entre deux embases, inférieure (4) et supérieure (5) en PVC munies de rondelles (6) de pierres poreuses ou de frittés poreux en acier inoxydable aisément extractibles afin de procéder après essai à leur nettoyage. L'étanchéité entre ces embases (4,5) et la bague (2) en PVC est assuré par un joint plat (7) écrasé lors du serrage des 6 écrous (80) sur les goujons (8) solidaires de l'embase inférieure (4). L'arrivée du solvant d'extraction (eau déminéralisée) se fait par un orifice (A) situé en bas de l'appareil et la sortie se fait par un orifice (B) situé vers le haut. L'arrivée et la sortie communiquent par un canal (40) avec un orifice central (41)

3

respectivement (50), (51) orienté vers l'intérieur du perméamètre pour déboucher en vis-à-vis des rondelles (6) de pierres poreuses.

Sur le schéma d'alimentation en eau du perméamètre représenté à la figure 2, l'orifice (A) est relié par l'intermédiaire d'un tube (20) en acier inoxydable et d'une vanne (V$_1$) à un réservoir (R) de contenance 5 litres dont le corps en plexiglas (21) et les embases (22,23) en acier inoxydable. L'embase supérieure (23) de ce réservoir est reliée à une bouteille d'azote sous pression régulée et peut être remise à la pression atmosphérique en fermant la vanne (V$_3$) et en ouvrant (V$_2$). Cet appareillage est placé dans un local dont la température reste comprise en 18 et 25°C. L'orifice (B) du perméamètre (10) est relié par un tube souple (24) à un flacon (25).

L'essai comporte les étapes consistant à :
- saturer le tube de liaison (20) et la pierre poreuse (6) de l'embase inférieure (4) du perméamètre (les vannes V$_1$ et V$_2$ sont ouvertes, la vanne V$_3$ est fermée)
- fermer les vannes V$_1$ et V$_2$
- placer un papier filtre sur la pierre poreuse (6),
- poser l'échantillon confiné dans sa bague (2) sur le joint (7) de l'embase inférieure (4),
- placer un papier filtre sur la face supérieure de l'échantillon,
- fixer l'embase supérieure (5) en serrant progressivement et uniformément les 6 écrous (80),
- relier l'orifice (B) au premier flacon (25) servant à recueillir les percolats par l'intermédiaire d'un tube souple,
- ouvrir les vannes V$_1$ et V$_3$, appliquer une pression fonction de la perméabilité du déchet traité étudié. Dès que l'échantillon est saturé et que les premiers volumes recueillis permettent d'avoir un ordre de grandeur du coefficient de perméabilité, nous fixons cette pression (P) de telle sorte que le débit percolé soit de 0,01 cm$^3$/s. Cette pression est maintenue constante pendant toute la durée de l'essai (deux jours).

Pour calculer cette pression, nous utilons la relation de Darcy qui pour les dimensions de l'échantillon ($\varnothing$ = 9,4 cm ; h = 4 cm) est :

Q = 1.7686.10$^4$K.P

relation dans laquelle le débit Q est exprimé en cm$^3$/s, le coefficient de perméabilité K en m/s et la pression P en KPa.

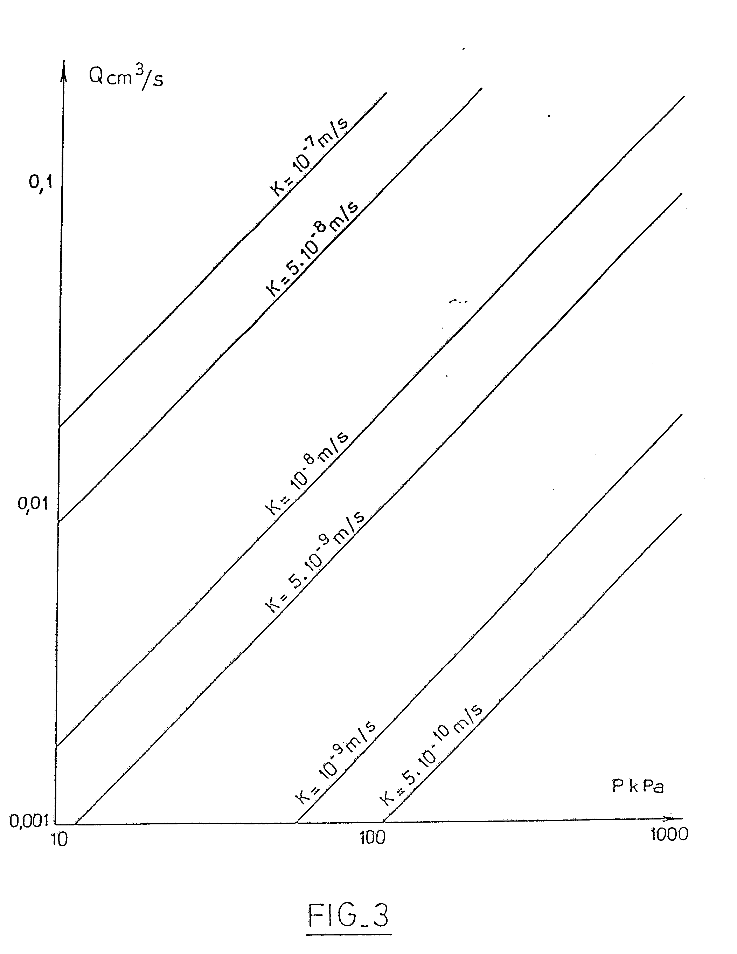

La figure 3 donne une représentation graphique de cette relation.

Avec un débit de 0,01 cm$^3$/s, obtenu avec un gradient hydraulique supérieur à 1, nous récupérons 36 cm$^3$ de percolats par heure.

Si l'on souhaite recueillir 1600 cm$^3$ de percolats, ceux-ci seront fractionnés en sept extractions de la manière suivante :

| extraction n° | 1 | 2 | 3 | 4 | 5 | 6 | 7 |
|---|---|---|---|---|---|---|---|
| volume recueilli cm$^3$ | 50 | 100 | 150 | 500 | 150 | 150 | 500 |

Les extractions 4 et 7 correspondent sensiblement à 14 heures de percolation pendant la nuit. Pour chaque extraction, on notera la température du liquide recueilli, son aspect, son odeur, la pression d'essai, le temps nécessaire pour recueillir un volume donné (d'où le débit Q). Ceci permettra de calculer le coefficient de perméabilité à partir de la formule ci-dessus.

L'échantillon est pesé après essai (P$_{H2}$) puis après un séchage de 48 heures dans une étuve à 105°C (P$_S$) pour déterminer :

1) sa teneur en liquide de mise en place par la formule :

$$W_0\% = \frac{P_{H0} - P_S}{P_S} \times 100$$

2) sa teneur en liquide avant essai par la formule:

$$W_1\% = \frac{P_{H1} - P_S}{P_S} \times 100$$

3) sa teneur en liquide après essai par la formule:

4

$$W_2\% = \frac{P_{H2} - P_S}{P_S} \times 100$$

Le volume (V) de l'échantillon étant connu, il est possible de déterminer la masse volumique apparente avant essai de l'échantillon par la formule:

$$\gamma_{H1} = \frac{P_{H1}}{V}$$

et sa masse volumique sèche par la formule

$$\gamma_d = \frac{P_S}{V}$$

L'analyse des substances contenues dans les percolats s'effectue par exemple par des méthodes normalisées telles que la spectographie d'absorption atomique ou la spectrophotmétrie.

L'analyse permet de déterminer les quantités (C) en mg/Kg de substances (A) extraites des volumes percolés ainsi que les volumes percolés ($V = \varepsilon v cm^3$) et de tracer la variation de (C) en fonction de (V).

Dans certains cas, il peut être utile de tracer également (V/C) en fonction de (V). L'obtention d'une droite permet de dire que la quantité (C) de substance (A) extraite varie en fonction de (V) suivant une loi hyperbolique du type :

$$C_V = C_{V_\infty} \frac{V}{V + a}$$

relation dans laquelle :

$C_V$ est la quantité (en mg/Kg) de substance (A) extraite pour un volume (V) percolé ($cm^3$)

$C_{V_\infty}$ est la quantité de substance A que l'on extrairait si le volume V était infini (temps infini)

a : volume au bout duquel nous avons 50% de la substance (A) extraite.

La courbe obtenue permet de constater pour quel volume de percolat la quasi totalité d'une substance a été extraite. Ceci permet de vérifier que pour un gradient hydraulique de 1 et un coefficient de perméabilité correspondant à celui de l'échantillon, le débit correspondant sur la figure 3 est très faible et le temps pour récupérer un volume déterminé par exemple, de 1500 $cm^3$ d'une substance sera de l'ordre de 7 années pour un coefficient de perméabilité du mélange de 10$^{-9}$ m/s. Ceci permet donc de s'assurer de la compatibilité de l'utilisation d'un mélange de coefficient de perméabilité donné avec les normes d'acceptation dans les décharges.

Nous donnons, à titre d'exepmple, les résultats obtenus par compactage de mélanges des matériaux suivants

- une boue (B) de station d'épuration d'eaux usées ayant une teneur en eau (obtenue par séchage à 105°C) de 735%.

- une argile (A) très plastique (limite de liquidité $W_2 = 63,5\%$ ; indice de plasticité $I_P = 38$) ayant une teneur en eau de 4,4%.

- des poussières (P) provenant du traitement des fumées d'usine d'incinération d'ordures ménagères.

La détermination des caractéristiques de compactage a été faite sur des mélanges binaires (B + P ; B + A) et sur un mélange ternaire (B + A + P).

Pour les mélanges binaires , le mode opératoire retenu est le suivant :

- malaxage de la boue avec un absorbant (ici A ou P) jusqu'à pouvoir compacter le mélange correctement homogénéisé. Le compactage est réalisé dans un moule PROCTOR (10,15 cm de diamètre, 11,7 cm de hauteur) à l'énergie du PROCTOR NORMAL (norme ASTM D 698 T ou AASHOT 99).

- après compactage et pesée du moule, détermination de la résistance à la pénétration ($\sigma$) à l'aide de l'aiguille PROCTOR adaptée à l'étude des matériaux fins.

- ajout d'une nouvelle quantité d'absorbant du mélange précédemment obtenu - malaxage - compactage puis mesure de la résistance à la pénétration. Cette opération est reconduite plusieurs fois afin de pouvoir obtenir la variation de la densité sèche ($\gamma d/\gamma \omega$, $\gamma d$ étant la masse volumique sèche) et de la résistance à la pénétration ($\sigma$) en fonction de la teneur en eau (W) ou de la quantité absorbant utilisé (C).

Pour le mélange ternaire, dans le cas présent, la boue a été malaxée avec l'argile à une concentration telle que la résistance à la pénétration soit de l'ordre de 500 KPa (valeur faible). A ce mélange (comme pour l'étude des mélanges binaires) seront rajoutées des quantités croissantes de poussières afin d'avoir les variations des caractéristiques de compactage ($\gamma d/\gamma \omega:\sigma$) en fonction de la teneur en eau résultante et en fonction de la concentration en absorbant ajouté à la boue.

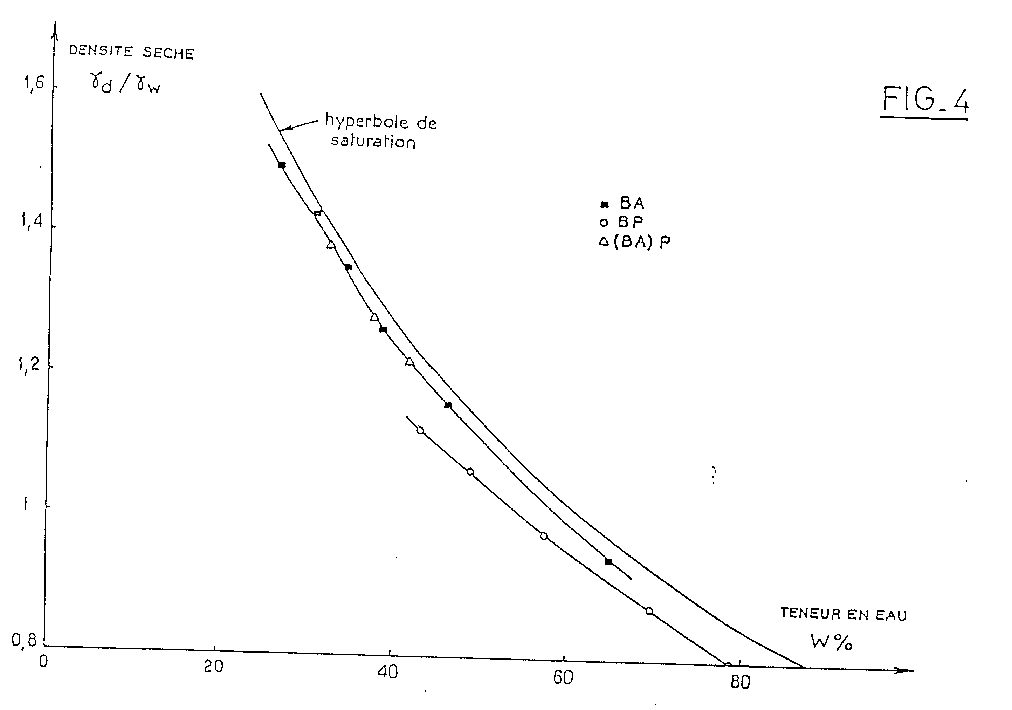

La figure 4 montre l'évolution de la densité sèche en fonction de la teneur en eau pour les trois mélanges étudiés. Tous les points obtenus sont proches de l'hyperbole de saturation tracée pour une densité des grains égale à 2,65.

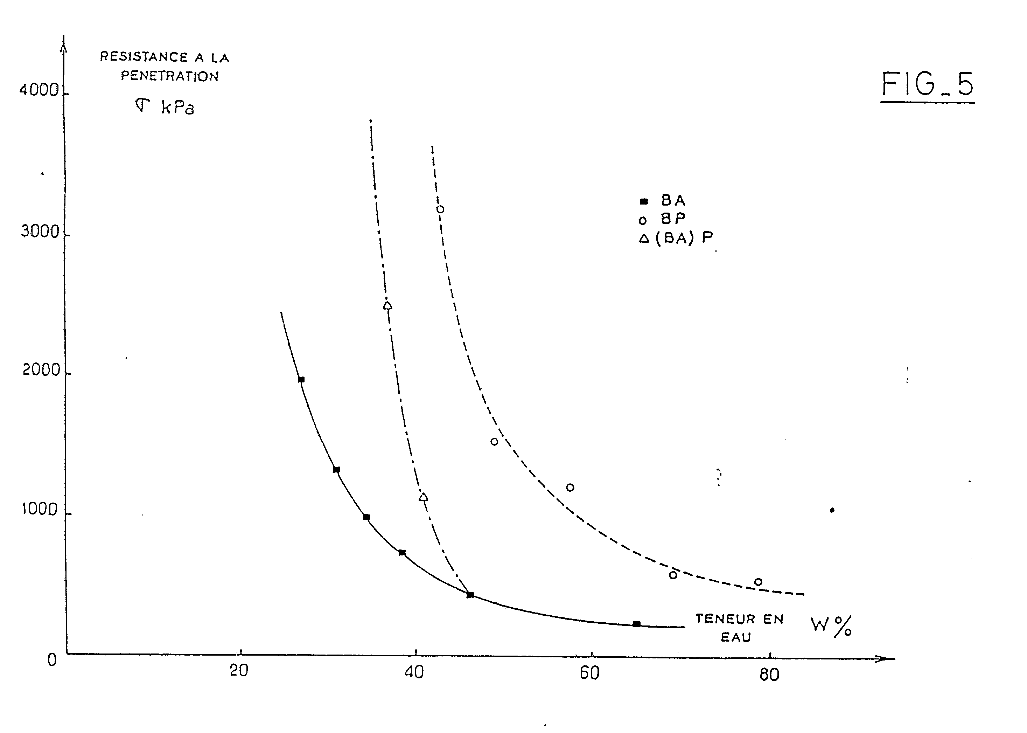

A teneur en eau égale, le malaxage de la boue avec de l'argile donne au mélange une densité sèche un peu plus forte que celle obtenu avec les poussières. Par contre, comme le montre la figure 5, la résistance à la pénétration ne suit pas le même sens de variation. Ainsi, à une teneur en eau de 40%, le mélange à l'argile a une résistance à la pénétration ($\sigma$) faible (de l'ordre de 700 KPa) alors que le mélange avec les poussière a une résistance à la pénétration ($\sigma$) supérieure à 4000 KPa. Si l'on souhaite obtenir in situ une résistance à la pénétration ($\sigma$) de 2000 KPa (valeur suffisante pour être assuré d'une bonne portance) il faut que le mélange à l'argile atteigne une teneur en eau de 27%, alors que nous pourrions arrêter l'ajout de poussières dès que la teneur en eau sera de l'ordre de 47%.

Ceci a bien sûr une incidence directe sur la quantité d'absorbant qu'il est nécessaire de malaxer à la boue pour que le mélange obtenu ait de bonnes caractéristiques de compactage.

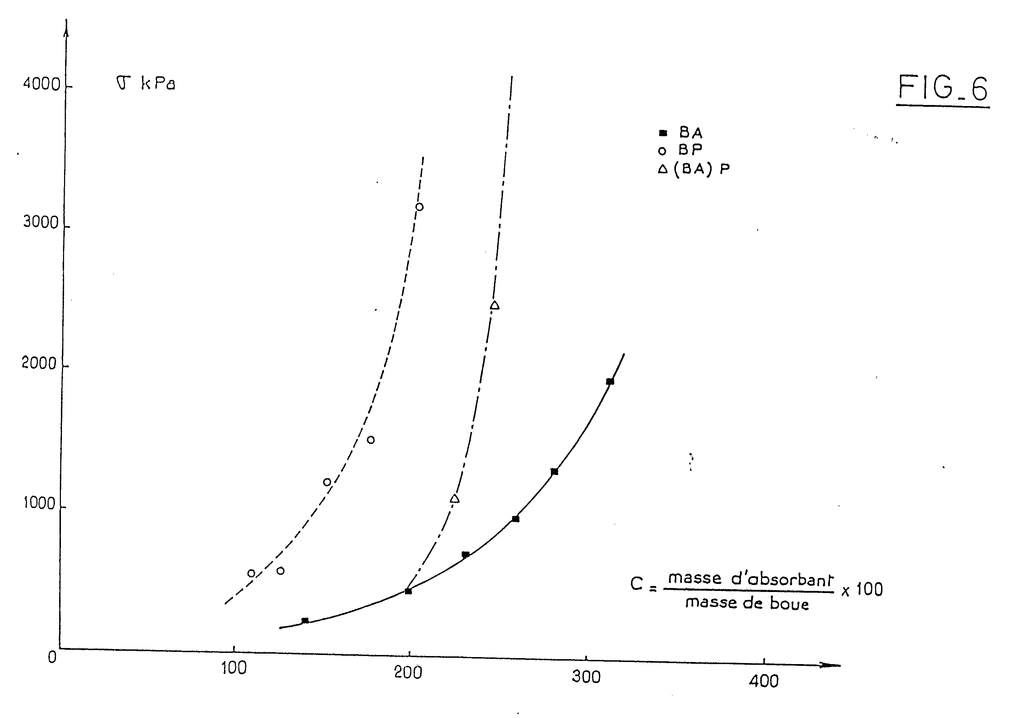

A la figure 6, nous avons tracé la variation de la résistance à la pénétration en fonction de la concentration (C) exprimant en pourcentage le rapport de la masse d'absorbant sur la masse de boue traitée.

Si on reprend comme critère T = 2000 KPa, on constate qu'il faut 315% d'argile pour obtenir ce résultat et seulement 185% de poussières.

Si le traitement à l'argile est arrêté à une concentration (C) de 200% ( la résistance à la pénétration étant de l'ordre de 500 KPa) il faut rajouter 40% de poussière pour obtenir la satisfaction du critère.

Selon les disponibilités sur le site de décharge d'argile ou de poussière, nous pourrions, de la même manière, étudier d'autres mélanges ternaires et définir le concentrations des divers constituants du mélange.

Pour toutes les compositions de mélanges conférant une résistance à la pénétration supérieure ou égale à 2000 KPa nous avons mesuré un coefficient de perméabilité inférieur à $10^{-9}$ m/s, ($6.10^{-11}$ m/s dans le cas du mélange ternaire). Les concentrations précédemment définies par les caractéristiques de compactage peuvent donc être retenues.

Dans le cas où la perméabilité mesurée est supérieure à $10^{-9}$ m/s, la première partie de l'étude sera reconduite avec une quantité optimale de matériau argileux, cette quantité optimale est obtenue par ajout de quantité croissante de matériau argileux.

Pour chaque teneur en matériau argileux, l'essai de perméabilité est reconduit.

La teneur en matériau argileux est la plus faible teneur conférant au matériau composite une perméabilité inférieure à $10^{-9}$ m/s

Le futur matériau composite est obtenu par malaxage. Le malaxage pourra se faire dans une unité de type centrale à béton.

Il consistera à ajouter au déchet à faible siccité des quantités croissantes de matériaux à forte siccité jusqu'à obtention de la teneur en eau désirée (recommandée par l'étude en laboratoire) pouvant être aisément contrôlé sur place.

Il est souhaitable que l'opération de malaxage se fasse en un lieu proche de la décharge ou sur la décharge elle-même afin de ne pas ralonger le délai entre la production du mélange composite et sa mise en place dans l'alvéole.

Avant compactage à l'aide de compacteurs habituellement utilisés dans le domaine routier, le matériau déversé dans l'alvéole sera réparti suivant une épaisseur uniforme.

Enfin, sans vouloir effectuer un développement complet, il est possible de valoriser le composite obtenu selon ce procédé, compte tenu de sa faible perméabilité ($K_s \leq 10^{-9}$ m/s ) et de sa bonne tenue mécanique, il peut être utilisé en tant que matériau d'imperméabilisation de fond de décharge (création d'une décharge imperméabilisé de façon artificielle) ou de couverture finale.

Cette valorisation n'est possible que sous certaines conditions :

- perméabilité à saturation du matériau composite, une fois en place et compacté à l'optimum Proctor, inférieure ou égale à $10^{-9}$ m/s;
- absence d'éléments polluants selon les normes en vigueur dans l'eau du test de perméabilité au laboratoire.

Les tests de perméabilité-lixiviation permettent donc de rendre compte de la possibilité de stocker les mélanges compactés ainsi obtenus dans la nature pourvu que les impératifs suivants soient respectés :

- Le stockage est une décharge de classe I. Dans la mesure où les caractéristiques du lixiviat et des composites les rendent compatibles avec les normes d'acceptation, ces produits peuvent éventuellement être stockés dans les décharges de classe II ou III.
- des alvéoles spécifiques sont créés pour l'enfouissement du composite
- la teneur en eau du composite devra être en permanence vérifiée afin de s'assurer que l'on se trouve toujours au voisinage de l'optimum recommandé par l'étude de laboratoire;

- le compactage des couches sera contrôlé par une mesure de densité apparente du composite, la densité apparente étanc corrélée avec la perméabilité, cette détermination permet d'assurer que les valeurs de perméabilité ainsi déterminées sur le terrain sont en concordance avec celles mesurées au laboratoires;

- la couverture de l'alvéole (0 m 40) sera effectuée avec le minéral argileux du site compacté selon les mêmes directives que le composite de façon à obtenir une perméabilité inférieure à $10^{-9}$ m/s .

D'autres modifications à la portée de l'homme de métier font également partie de l'esprit de l'invention.

## Revendications

1) Procédé d'élimination d'au moins deux déchets dont au moins un est inacceptable en l'état, caractérisé en ce qu'il consiste à mélanger un ou plusieurs déchets de faible siccité mais n'exsudant pas spontanément de liquide avec un ou plusieurs déchets ultimes solides de forte siccité et à forte capacité d'absorption de liquide pour obtenir un matériau composite acceptable sur un site de stockage de déchets.

2) Procédé selon la revendication 1, caractérisé en ce que le déchet solide est constitué de cendres et poussières provenant d'électrofiltration.

3) Procédé selon une des revendications précédentes, caractérisé en ce que les déchets solides sont des mâchefers d'incinération d'ordures ménagères.

4) Procédé selon une des revendications précédentes, caractérisé en ce que les déchets solides sont des suies provenant de combustion.

5) Procédé selon une des revendications précédentes, caractérisé en ce que les déchets solides sont des scories d'affinage de métaux.

6) Procédé selon une des revendications précédentes, caractérisé en ce que les déchets solides sont des déchets de fonderie.

7) Procédé d'élimination de déchets selon une des revendications précédentes, caractérisé en ce que le mélange ainsi obtenu est compacté et imperméabilisé par malaxage avec de l'argile.

8) Procédé selon la revendication 1 caractérisé en ce que l'acceptabilité du matériau composite est évaluée par une méthode de percolation mise en oeuvre dans un dispositif de percolation et consistant :

- à recueillir par un gradient hydraulique supérieur à 1 un volume fixé de percolat par un nombre d'extractions fixées de volume différent ;

- à déterminer dans quel volume de percolat une quantité d'une substance déterminé est extraite ;

- et à vérifier que pour une perméabilité correspondant à celle du matériau composite et un gradient hydraulique unitaire la quantité de substance percolée est compatible avec les normes en vigueur.

9) Dispositif de percolation permettant de mettre en oeuvre le procédé, selon la revendication 8, caractérisé en ce qu'il comprend un réservoir (R) d'eau déminéralisée pour alimenter sous une pression déterminée, par une vanne (V3) reliant le réservoir (R) à un réservoir d'azote sous pression, un perméamètre (10) dont l'orifice de sortie est relié à un flacon (25).

10) Dispositif de percolation selon la revendication 9, caractérisé en ce que le perméamètre est constitué de deux embases (4,5) serrant entre deux joints d'étanchéïté (7) une bague (2) contenant l'échantillon de mélange, ces embases comportant respectivement des canaux (40,50) et des orifices (41,51) mettant en communication l'extérieur du perméamètre avec l'intérieur de la bague (2) par l'intermédiaire de deux rondelles poreuses (6).

FIG_1

1ère extraction

Purge    P azote

eau
déminéralisée

FIG_2

FIG_3

FIG_4

DENSITE SECHE $\gamma_d / \gamma_w$

hyperbole de saturation

■ BA
○ BP
△ (BA) P

TENEUR EN EAU W%

EP 0 312 454 A2

FIG_5

RESISTANCE A LA PENETRATION

$\sigma$ kPa

■ BA
○ 8P
△ (BA) P

TENEUR EN EAU  W %

FIG_6

■ BA
○ BP
△ (BA) P

$$C = \frac{\text{masse d'absorbant}}{\text{masse de boue}} \times 100$$

EP 0 312 454 A2